# EUROPÄISCHE PATENTANMELDUNG

(11) **EP 2 063 331 A1**
(43) Veröffentlichungstag der Anmeldung: **27.05.2009**
(21) Anmeldenummer: 07022630.3
(22) Anmeldetag: 21.11.2007
(51) Int. Cl.: G05B 19/042

(54) **Sensor für die Automatisierungstechnik und Verfahren zum Konfigurieren eines Sensors**

(71) Anmelder: Pepperl + Fuchs GmbH, 68307 Mannheim (DE)
(72) Erfinder: Trebbels, Dennis, 67434 Neustadt a.d. Weinstr. (DE); Höbel, Heiko, 67549 Worms (DE); Bergtholdt, Tobias, 68163 Mannheim (DE)
(74) Vertreter: Schiffer, Axel Martin

(57) **Zusammenfassung**

Die vorliegende Erfindung betrifft einen Sensor für die Automatisierungstechnik zum Nachweis einer Messgröße, insbesondere zum Nachweis von Objekten oder Gegenständen, mit einem Sensorelement zum Messen einer physikalischen Größe, mit einem ersten Anschlussmittel zum Anschließen des Sensors an ein Anschlussgerät in einem Betriebsmodus und mit einer Steuer- und Auswerteeinheit zum Ansteuern des Sensorelements, zum Verarbeiten eines Messsignals des Sensorelements und zum Ausgeben eines Ausgangssignals an das erste Anschlussmittel, wobei die Steuer- und Auswerteeinheit einen Speicher aufweist zum Abspeichern mindestens von Konfigurations- und Programmdaten des Sensors. Der Sensor ist dadurch gekennzeichnet, dass ein zweites Anschlussmittel vorhanden ist zum Anschließen des Sensors an einen externen Rechner für einen Konfigurationsmodus, dass in dem Speicher der Steuer- und Auswerteeinheit eine Konfigurationssoftware gespeichert ist, welche in einen Arbeitsspeicher eines externen Rechners geladen werden kann, wenn der Sensor an den externen Rechner angeschlossen ist, und dass die Konfigurationssoftware zum automatischen oder interaktiven Konfigurieren des Sensors durch einen Benutzer eingerichtet ist. Die Erfindung betrifft außerdem ein Verfahren zum Konfigurieren eines Sensors.

## Beschreibung

Die vorliegende Erfindung betrifft in einem ersten Aspekt einen Sensor für die Automatisierungstechnik zum Nachweis einer Messgröße, insbesondere zum Nachweis von Objekten oder Gegenständen, nach dem Oberbegriff des Anspruchs 1.

In einem zweiten Gesichtspunkt bezieht sich die Erfindung auf ein Verfahren zum Konfigurieren eines Sensors für die Automatisierungstechnik.

Ein gattungsgemäßer Sensor weist ein Sensorelement zum Messen einer physikalischen Größe und ein erstes Anschlussmittel zum Anschließen des Sensors an ein Anschlussgerät auf. Außerdem ist eine Steuer- und Auswerteeinheit zum Ansteuern des Sensorelements, zum Verarbeiten eines Messsignals des Sensorelements und zum Ausgeben eines Ausgangssignals an das erste Anschlussmittel vorhanden, wobei die Steuer- und Auswerteeinheit einen Speicher aufweist zum Abspeichern mindestens von Konfigurations- und Programmdaten des Sensors.

Solche Sensoren sind in zahlreichen Varianten, beispielsweise als induktive, kapazitive oder optische, sowie als Temperatur-, Druck-, Füllstandssensoren und Weg- oder Drehgeber bekannt.

Zum Programmieren und/oder Konfigurieren der Sensoren werden bisher spezielle Programmiergeräte eingesetzt. Dabei werden üblicherweise RS232- oder RS485-Schnittstellen verwendet. Der Datentransfer ist hier jedoch vergleichsweise langsam, so dass ein Update von größeren Software-Teilen umständlich ist. Bei einem alternativen Verfahren werden dem Sensor die nötigen Daten mit Hilfe von Kurzschlusstaktungen übermittelt. Dazu wird der Sensor üblicherweise von dem Anschlussgerät getrennt, an welches er im normalen Messbetrieb angeschlossen ist und das Programmiergerät wird an den nun freien Steckverbinder angeschlossen. Über definierte Kurzschlüsse zwischen den einzelnen Kontakten des Steckverbinders werden sodann die nötigen Konfigurationsdaten, insbesondere eine aktuelle Firmware-Version, auf den Sensor übertragen. Hierfür wird ebenfalls ein separates Programmiergerät benötigt und auch dieses Verfahren ist relativ langsam.

Ein Näherungsschalter, bei welchem über einen elektrischen Anschluss sowohl Daten als auch elektrische Energie übertragen werden, ist in DE 41 23 828 C2 beschrieben.

Die US-2005/0083741 A1 und US-7,165,109 B2 betreffen die Funktionalität von USB-Komponenten. In US-7,165,109 B2 ist ein Ablauf beschrieben, wo eine an eine USB-Schnittstelle eines Rechners angeschlossene Komponente diesen Rechner veranlasst, sich über das internet eine geeignete Treiber-Software für die Komponente herunterzuladen.

Eine **Aufgabe** der Erfindung ist es, einen Sensor zu schaffen, welcher im Vergleich zum Stand der Technik einfacher konfiguriert werden kann. Außerdem soll ein Verfahren bereitgestellt werden, welches das Konfigurieren von Sensoren erleichtert.

Diese Aufgabe wird in einem ersten Gesichtspunkt der Erfindung durch den Sensor mit den Merkmalen des Anspruchs 1 gelöst.

In einem zweiten Aspekt der Erfindung wird die Aufgabe durch das Verfahren mit den Merkmalen des Anspruchs 11 gelöst.

Bevorzugte Ausgestaltungen des erfindungsgemäßen Sensors und vorteilhafte Varianten des erfindungsgemäßen Verfahrens sind Gegenstand der abhängigen Ansprüche und werden außerdem in der folgenden Beschreibung, insbesondere im Zusammenhang mit der Figur, erläutert.

Der Sensor der oben genannten Art ist erfindungsgemäß dadurch weitergebildet, dass ein zweites Anschlussmittel vorhanden ist zum Anschließen des Sensors an einen externen Rechner für einen Konfigurationsmodus, dass in dem Speicher der Steuer- und Auswerteeinheit eine Konfigurationssoftware gespeichert ist, welche in einen Arbeitsspeicher eines externen Rechners geladen werden kann, wenn der Sensor an den externen Rechner angeschlossen ist, und dass die Konfigurationssoftware zum automatischen oder interaktiven Konfigurieren des Sensors durch einen Benutzer eingerichtet ist.

Bei dem erfindungsgemäßen Verfahren zum Konfigurieren eines Sensors wird der Sensor zeitweilig mit einem externen Rechner verbunden. Anschließend wird eine in einem Speicher des Sensors gespeicherte Konfigurationssoftware in einen Arbeitsspeicher des Rechners geladen und der Sensor wird sodann mit Hilfe der Konfigurationssoftware automatisch oder von einem Benutzer konfiguriert.

Als ein Kerngedanke der Erfindung kann zunächst die Erkenntnis angesehen werden, dass heute verfügbare Mikrokontroller sowie Speicherbausteine hinreichend große Speicherbereiche aufweisen, dass dort auch eine Konfigurations- oder Parametriersoftware für den Sensor abgelegt werden kann.

Als weiterer Grundgedanke der Erfindung kann erachtet werden, den Sensor autark zu gestalten, so dass die notwendige Software zum Konfigurieren des Sensors in dem Sensor selbst enthalten ist.

Ein wesentlicher Vorteil der Erfindung ist, dass keine zusätzlichen Programmiergeräte, wie beispielsweise Protokollwandler, Schnittstellenwandler oder Programmiergeräte für die Kurzschlusstaktung, mehr notwendig sind. Weiterhin müssen keine CDs, DVDs oder ähnliche Datenträger, auf welchen die nötige Parametrier- oder Konfigurierungssoftware abgelegt ist, mitgeliefert werden. Schließlich kann bei der Erfindung die Notwendigkeit für den Anwender entfallen, auf dem externen Rechner Software zu installieren. Vorteilhaft ist außerdem, dass bei der Erfindung auf vorhandene Hardware und betriebssystemunabhängige Software zurückgegriffen werden kann.

Bei dem Sensorelement kann es sich grundsätzlich um jedes Element handeln, welches zum Nachweis einer physikalischen Größe geeignet ist. Beispielsweise kann das Sensorelement eine Spule oder ein Schwingkreis eines induktiven Näherungsschalters, ein Fotodetektor eines optischen Sensors, eine kapazitive Sonde oder ein Thermoelement sein.

Dementsprechend kann es sich bei den Sensoren grundsätzlich um jede Art von Sensoren zum Nachweis einer Messgröße oder zum Nachweis von Gegenständen oder Objekten handeln. Besonders vorteilhaft kann die vorliegende Erfindung für Sensoren im industriellen Bereich, beispielsweise induktive, kapazitive oder optische Sensoren, Temperatur- oder Drucksensoren, eingesetzt werden. Beispielsweise kann es sich auch um Identifizierungssensoren, etwa RFID-Leseköpfe, handeln.

Unter dem Begriff des Konfigurierens soll für die vorliegende Beschreibung jede softwaremäßige Veränderung oder Einstellung des Sensors verstanden werden. Dies umfasst insbesondere jegliche Übertragung von Programm- oder Binärcode an den Sensor sowie das Aufspielen einer Firmware und das Ändern und/oder Hinzufügen von Parametern.

Grundsätzlich kann es sich bei dem Anschlussgerät um ein Relais, eine sonstige Schalt- oder Steuereinrichtung, ein Speise- oder Auswertegerät oder auch um ein Bussystem handeln. In den häufigsten Fällen wird der Sensor im Betriebsmodus mit einer speicherprogrammierbaren Steuerung als Anschlussgerät verbunden.

Unter dem Begriff Steuer- und Auswerteeinheit sollen für die vorliegende Beschreibung im Wesentlichen alle intelligenten elektronischen Komponenten des Sensors verstanden werden. Grundsätzlich kann die Steuer- und Auswerteeinheit auch aus einer Mehrzahl von Mikrocontrollern, FPGAs, CPLDs, GALs oder anderen programmierbaren Logik-Komponenten und gegebenenfalls zugeordneten Speicherbausteinen, aufgebaut sein, durch welche beispielsweise unterschiedliche Funktionalitäten realisiert werden.

Unter einem Anschlussmittel sollen für die vorliegende Beschreibung diejenigen Komponenten verstanden werden, welche notwendig sind, um zwischen dem Sensor und dem externen Rechner beziehungsweise zwischen dem Sensor und einem Anschlussgerät eine schnittstellenmäßige Verbindung, also eine Datenverbindung, zu etablieren. Bevorzugt ist diese schnittstellenmäßige Verbindung auch in der Lage, elektrische Energie zu übertragen. All dies kann grundsätzlich auch drahtlos, beispielsweise über Funk, erfolgen. Bei zweckmäßigen Ausgestaltungen des erfindungsgemäßen Sensors sind jedoch Steckverbindungen als Anschlussmittel vorgesehen, über welche sowohl Daten und gegebenenfalls auch elektrische Energie geleitet werden kann. Ein besonderer Vorteil der Erfindung ist, dass als externer Rechner praktisch jede Art von Rechner eingesetzt werden kann. Beispielsweise können im Fertigungsprozess PCs verwendet und es können hierbei insbesondere kundenspezifische Parametrierungen sowie Funktionstests durchgeführt werden. Wenn eine Neukonfigurierung oder eine Eichung am Einsatzort notwendig sein sollte, werden bevorzugt Laptops, Handhelds oder Palmtops eingesetzt. Grundsätzlich kann auch ein Mobiltelefon hierfür verwendet werden.

Im Konfigurationsmodus ist der Sensor an den externen Rechner angeschlossen und auf dem externen Rechner wird erfindungsgemäß die im Sensor gespeicherte Konfigurationssoftware gestartet.

Prinzipiell ist möglich, dass der Sensor mit einer eigenen Spannungsversorgung, beispielsweise also einem eigenen Netzteil, einer Batterie oder einem Akkumulator, versehen ist. Bei den meisten Sensoren im industriellen Bereich ist dies jedoch nicht der Fall. Vielmehr erfolgt dort eine Versorgung mit elektrischer Energie über das erste Anschlussmittel von einem Anschlussgerät. Damit auch im Konfigurationsmodus der Sensor mit elektrischer Energie versorgt wird, kann zweckmäßig der Sensor über das zweite Anschlussmittel mit elektrischer Energie versorgt werden, wenn der Sensor mit einem externen Rechner verbunden ist.

Grundsätzlich kann es sich bei dem ersten und dem zweiten Anschlussmittel um separate physikalische Einheiten handeln. Bei einer besonders bevorzugten Ausgestaltung des erfindungsgemäßen Sensors sind aber das erste Anschlussmittel und das zweite Anschlussmittel durch ein- und denselben Anschluss, insbesondere durch ein- und denselben Steckverbinder, gebildet. An dem Gehäuse und den Peripherieverbindungen des Sensors müssen dann vorteilhafterweise keine Änderungen vorgenommen werden.

Besonders bevorzugt werden als Steckverbinder für Sensoren in der Automatisierungstechnik dichtende Rundsteckverbinder eingesetzt. Hierbei kann es sich beispielsweise um 4- oder 5-polige Steckverbinder, insbesondere um V1- oder V3-Steckverbinder, handeln.

Der Konfigurationsmodus beinhaltet jedenfalls einen Konfigurationsvorgang, der grundsätzlich auch während des Messbetriebs erfolgen kann. Konfigurationsmodus und Betriebsmodus können sich demgemäß zeitlich überlappen, also gleichzeitig eingenommen werden.

Damit sensorintern die richtigen Einstellungen vorgenommen werden können und der Sensor auf einen Konfigurations- oder einen Messbetrieb eingestellt werden kann, ist es zweckmäßig, wenn eine elektronische Einrichtung vorhanden ist, die erkennt, ob sich der Sensor in einer Betriebsverbindung mit einem Anschlussgerät befindet und/oder ob der Sensor mit einem externen Rechner verbunden ist. Durch eine solche elektronische Einrichtung kann auch die Gefahr einer Beschädigung wegen zu hoher Spannungspegel an den Kontakten der Steckverbinder, welche die Anschlussmittel bilden, reduziert werden. Außerdem können in Sondersituationen, wo der Sensor sowohl an einem Anschlussgerät als auch an einen externen Rechner angeschlossen ist, Konflikte etwa zwischen dem Anschlussgerät und dem externen Rechner vermieden werden.

Bei einer einfachen Variante kann hierzu die elektronische Einrichtung eine an mindestens einem Kontakt des ersten oder des zweiten Anschlussmittels anliegende Versorgungsspannung auswerten. Ergänzend oder alternativ kann die elektronische Einrichtung auch ein an einem Kontakt des ersten oder des zweiten Anschlussmittels anliegendes Datensignal auswerten. Grundsätzlich können auch an mehreren Kontakten des ersten oder des zweiten Anschlussmittels anliegende Datensignale ausgewertet werden. So kann insgesamt zuverlässig festgestellt werden, ob sich der Sensor in einer Betriebsverbindung befindet oder mit einem externen Rechner verbunden ist.

Weiterhin ist bevorzugt, wenn der Speicher der Steuer- und Auswerteinheit einen schreibgeschützten Bereich aufweist. Beispielsweise kann hierin ein Benutzerhandbuch abgespeichert sein, welches bei Verbindung mit dem externen Rechner auf diesem gestartet und angesehen werden kann. Ein solches Benutzerhandbuch kann aktualisiert oder ergänzt werden, wobei aktuelle Versionen von dem externen Rechner über das Internet heruntergeladen und anschließend auf den Sensor übertragen werden können.

Wenn das Speichervolumen eines verwendeten Mikrocontrollers nicht ausreicht, können gegebenenfalls zusätzliche Speicherbausteine eingesetzt werden.

Zweckmäßig kann in einem Speicher der Steuer- und Auswerteeinheit ein Bootloader vorhanden oder gespeichert sein, welcher eine nachträgliche Programmierung des Mikrocontrollers ermöglicht.

Bei einer weiteren bevorzugten Variante des erfindungsgemäßen Sensors und des erfindungsgemäßen Verfahrens ist die Steuer- und Auswerteeinrichtung dazu eingerichtet, im Konfigurationsmodus über zwei Adern einer Datenleitung Konfigurationsdaten differentiell zwischen dem Sensor und dem Rechner zu übertragen. Hierbei kann eine größere Störsicherheit und damit eine größere Geschwindigkeit erreicht werden.

Besonders bevorzugt wird für den Konfigurationsmodus auf vorhandene Standardprotokolle zurückgegriffen und die Daten werden dann zwischen dem Sensor und dem externen Rechner mit einer Bandbreite größer als 1 MBit/s übertragen. Vorteilhaft ist hierbei außerdem, dass kein weiterer Entwicklungsaufwand nötig ist.

Grundsätzlich kann die Datenübertragung zwischen dem Sensor und dem Rechner über eine herkömmliche serielle Schnittstelle, beispielsweise RS-232, erfolgen.

Besonders bevorzugt wird der Sensor für den Konfigurationsmodus an eine USB-Schnittstelle des externen Rechners angeschlossen. Der Sensor wird von dem externen Rechner dann beispielsweise als Massenspeicher erkannt und behandelt. Auch eine Versorgung mit elektrischer Energie ist über die USB-Schnittstelle möglich. Die Steuerund Auswerteeinheit weist dann eine entsprechende USB-Funktionalität auf, wobei der externe Rechner als USB-Host und der Sensor als USB-Slave wirkt.

Die Konfiguration des Sensors oder ein Neuaufspielen oder Ergänzen einer Firmware auf den Sensor ist besonders komfortabel und einfach möglich, wenn die Konfigurationssoftware nach Verbindung des Sensors mit dem externen Rechner automatisch auf dem externen Rechner gestartet wird.

Sofern Einstellungen des externen Rechners ein völlig automatisches Starten der Konfigurationssoftware nicht zulassen, kann bevorzugt vorgesehen sein, dass zum Start der Konfigurationssoftware jedenfalls nur eine minimale Benutzerinteraktion, beispielsweise also nur ein einmaliges Bestätigen durch Drücken der ENTER-Taste, erforderlich ist.

Jeweils aktuelle Versionen der Firmware oder der Konfigurationssoftware für die Sensoren können auf einem Server, auf welchen über das Internet zugegriffen werden kann, abgelegt werden. Besonders vorteilhaft ist deshalb, wenn die auf dem Sensor abgelegte Konfigurationssoftware den externen Rechner veranlasst, eine Netzwerkverbindung zu einem Remote-Host aufzubauen und zu prüfen, ob aktuelle Programmversionen für die Konfigurationssoftware und/oder eine Sensor-Firmware vorliegen und gegebenenfalls aktuelle Programmversionen vom Remote-Host herunterzuladen und in den Speicher des Sensors zu übertragen.

Die Konfigurationssoftware kann auf dem Sensor grundsätzlich als ausführbarer Code gespeichert sein. Um eine größere Unabhängigkeit von dem konkret eingesetzten externen Rechner zu erzielen, ist die Konfigurationssoftware besonders bevorzugt plattformunabhängig ausführbar. Beispielsweise kann die Konfigurationssoftware auch als interpretierbarer Code abgespeichert sein.

Weitere Merkmale und Vorteile der Erfindung werden nachstehend mit Bezug auf die beigefügte schematische Zeichnung beschrieben. Hierin zeigt:

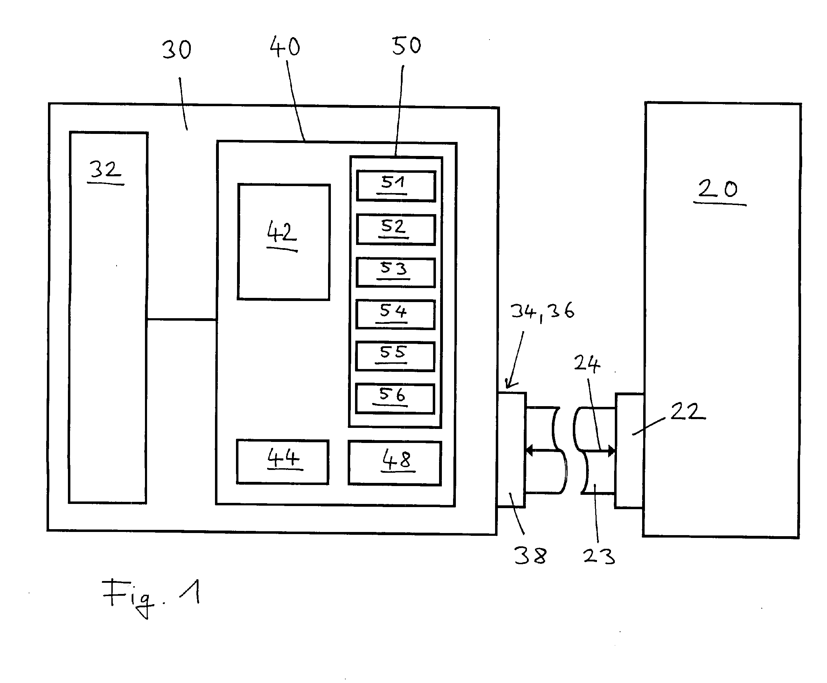

- Figur 1:: in schematischer Ansicht ein Ausführungsbeispiel eines erfindungsgemäßen Sensors

Der in Figur 1 schematisch dargestellte Sensor 30 weist als wesentliche Komponenten ein Sensorelement 32, beispielsweise eine Spule, eine Steuer- und Auswerteeinheit 40 mit Speicher 50 und einen Steckverbinder 38 auf, durch welchen sowohl ein erstes Anschlussmittel 34 als auch ein zweites Anschlussmittel 36 verwirklicht ist.

Im Betriebsmodus wird der Sensor 30 über den Steckverbinder 38 an ein hier nicht dargestelltes Anschlussgerät, beispielsweise eine speicherprogrammierbare Steuerung, angeschlossen.

In der in Figur 1 gezeigten Situation befindet sich der Sensor 30 in einem Konfigurationsmodus und ist über ein USB-Kabel 23 an eine USB-Schnittstelle 22 eines Rechners 20, insbesondere eines PCs, angeschlossen. Ein in beiden Richtungen stattfindender Datenaustausch ist durch einen Doppelpfeil 24 veranschaulicht.

Die Steuer- und Auswerteeinheit 40 ist ein Mikrocontroller mit einem Flash-Memory als Speicher 50. Derzeit sind solche Mikrocontroller mit Flash-Memory in der Größe von 512 kB bis zu 1 MB erhältlich. Dieser große Speicher 50 bietet ausreichend Platz, um neben einer Sensor-Firmware 52 und dauerhaft gespeicherten Daten, beispielsweise Kalibrierdaten 54 und einer Parameterdatei 55 außerdem eine eigenständige Konfigurationssoftware 56 zu speichern, welche erfindungsgemäß zum komfortablen Konfigurieren und Parametrieren des Sensors 30 vorgesehen ist.

Außerdem weist der Speicher 50 einen schreibgeschützten Bereich 51 auf, in welchem beispielsweise ein Benutzerhandbuch des Sensors gespeichert sein kann, welches bei Anschluss des Sensors 30 an den Rechner 20 mit Hilfe eines Monitors dieses Rechners von einem Benutzer angesehen werden kann. Weiterhin ist in dem Speicher 50 eine Software 53, ein sogenannter Bootloader, vorgesehen, der ein nachträgliches Programmieren des Mikrocontrollers ermöglicht.

Als weitere Bestandteile weist die Steuer- und Auswerteeinheit 40 eine CPU 42 sowie eine elektronische Einrichtung 48 auf, welche feststellt, ob sich der Sensor 30 in einer Betriebsverbindung mit einem Anschlussgerät befindet oder ob der Sensor 30, wie in der dargestellten Situation, mit einem externen Rechner 20 verbunden ist. Bei dieser elektronischen Einrichtung 48 handelt es sich nicht um eine Demodulationsschaltung, da bei der vorliegenden Erfindung die Versorgungsspannung und die Daten über separate Kontakte des Steckverbinders 38 geführt werden. Ein USB-Betrieb kann beispielsweise dadurch festgestellt werden, dass eine Sensorbetriebsspannung 5 Volt beträgt und somit weit entfernt ist von dem für Sensoren in der Automatisierungstechnik üblichen Spannungsbereich zwischen 10 und 30 Volt DC. Entsprechend kann die elektronische Einrichtung 48 veranlassen, dass der Sensor wieder in Normalbetrieb arbeitet, wenn die Betriebsspannung im genannten Bereich zwischen 10 und 30 Volt liegt und der Sensor entsprechend an ein Anschlussgerät angeschlossen ist. Die Versorgungsspannungen müssen hier nicht notwendigerweise auf denselben Kontakten des Steckverbinders 38 liegen sondern es ist grundsätzlich auch möglich, dass die Versorgungsspannung auf jeweils verschiedenen Pins zugeführt wird.

Wenn der Sensor 30 mit der USB-Schnittstelle 22 des Rechners 20 verbunden ist, kommt innerhalb des Sensors 30 eine USB-Schnittstelle 44 zum Einsatz, durch welche eine USB-Slave-Funktionalität realisiert wird.

Der Sensor 30 kann sich dann wie ein Massenspeicher verhalten und wird von dem PC demgemäß behandelt werden. Beispielsweise können in dem Speicher 50 die Daten in einem Dateisystem abgelegt sein. Solch ein Dateisystem kann vom Betriebssystem nach Anstecken des Sensors 30 an die Schnittstelle 22 des Rechners 20 automatisch erkannt werden. Nach dem Anstecken kann sodann vom Rechner 20 in gewohnter Weise auf die Dateien im Massenspeicher zugegriffen werden. Eine dieser Dateien beinhaltet die Konfigurationssoftware 56, welche eine leicht zu bedienende graphische Benutzeroberfläche zur Verfügung stellt und welche nach Anstecken des Sensors 30 an den Rechner 20 entweder automatisch oder gegebenenfalls nach Bestätigung durch einen Benutzer, also mit minimaler Benutzerinteraktion, auf dem Rechner 20 gestartet wird. Mit Hilfe dieser Konfigurationssoftware 56 kann der Sensor 30 von einem Benutzer interaktiv konfiguriert werden und es können beispielsweise Änderungen in der Parameterdatei 55 und/oder bei den Kalibrierdaten 54 vorgenommen werden. Die Konfigurierungssoftware 56 kann beispielsweise in Java implementiert sein. Der Rechner 20 ist dann ohne Weiteres in der Lage, dieses Programm auszuführen. Vom Benutzer während der Konfigurierungsphase mit Hilfe der Konfigurierungssoftware 56 vorgenommene Änderungen und Einstellungen können beispielsweise in einer weiteren Datei im Speicher 50 des Sensors 30 dauerhaft gespeichert werden. Ein Zugriff auf diese Datei kann dann im Normalbetrieb des Sensors, also wenn der Sensor mit dem Anschlussgerät verbunden ist, mit Hilfe der Sensor-Firmware 52 durch eine geeignete Schnittstelle erfolgen.

Durch die vorliegende Erfindung werden ein neuartiger Sensor und ein Verfahren zum Konfigurieren eines Sensors bereitgestellt, wobei insbesondere ein bereits vorhandener dichtender Rundsteckverbinder für eine alternative Kommunikation über ein USB-Protokoll mit einem externen Rechner genutzt werden. Erfindungsgemäß enthält der Sensor ein, insbesondere graphisches, Parametriertool oder eine Konfigurationssoftware, welche bei der Produktion des Sensors aber auch vom Endanwender zur Konfigurationszwecken genutzt werden kann. Mit Hilfe der Erfindung sind Firmware-Updates und Updates der Konfigurierungssoftware simultan möglich und können sehr bequem, beispielsweise auch vom Endanwender, durchgeführt werden.

Grundsätzlich ist auch möglich, am Sensorgehäuse einen zusätzlichen Steckverbinder für die USB-Verbindung mit dem externen Rechner vorzusehen. Ebenso können auch andere Schnittstellen oder Protokolle, beispielsweise Firewire, verwendet werden. Besonders bevorzugt werden USB-Protokolle beziehungsweise Fortentwicklungen oder Varianten hiervon, eingesetzt. Schließlich ist auch eine Funkschnittstelle zum externen Rechner grundsätzlich möglich.

## Patentansprüche

1. Sensor für die Automatisierungstechnik zum Nachweis einer Messgröße, insbesondere zum Nachweis von Objekten oder Gegenständen,
insbesondere zur Durchführung des Verfahrens nach einem der Ansprüche 11 bis 18,
mit einem Sensorelement (32) zum Messen einer physikalischen Größe,
mit einem ersten Anschlussmittel (34) zum Anschließen des Sensors (30) an ein Anschlussgerät in einem Betriebsmodus und
mit einer Steuer- und Auswerteeinheit (40) zum Ansteuern des Sensorelements (32), zum Verarbeiten eines Messsignals des Sensorelements (32) und
zum Ausgeben eines Ausgangssignals an das erste Anschlussmittel (34), wobei die Steuer- und Auswerteeinheit (40) einen Speicher (50) aufweist zum Abspeichern mindestens von Konfigurations- und Programmdaten des Sensors (51-55),
**dadurch gekennzeichnet,**
**dass** ein zweites Anschlussmittel (36) vorhanden ist zum Anschließen des Sensors (30) an einen externen Rechner (20) für einen Konfigurationsmodus, dass in dem Speicher (50) der Steuer- und Auswerteeinheit (40) eine Konfigurationssoftware (56) gespeichert ist, welche in einen Arbeitsspeicher eines externen Rechners (20) geladen werden kann, wenn der Sensor (30) an den externen Rechner (20) angeschlossen ist, und
**dass** die Konfigurationssoftware (56) zum automatischen oder interaktiven Konfigurieren des Sensors (30) durch einen Benutzer eingerichtet ist.

2. Sensor nach Anspruch 1,
**dadurch gekennzeichnet,**
**dass** das erste Anschlussmittel (34) und das zweite Anschlussmittel (36) durch ein und denselben Anschluss, insbesondere durch ein und denselben Steckverbinder (38), gebildet ist.

3. Sensor nach Anspruch 1 oder 2,
**dadurch gekennzeichnet,**
**dass** der Sensor (30) über das erste Anschlussmittel (34) mit elektrischer Energie versorgt wird, wenn der Sensor (30) mit einem Anschlussgerät verbunden ist und/oder
**dass** der Sensor (30) über das zweite Anschlussmittel (36) mit elektrischer Energie versorgt wird, wenn der Sensor (30) mit einem externen Rechner (20) verbunden ist.

4. Sensor nach einem der Ansprüche 1 bis 3,
**dadurch gekennzeichnet,**
**dass** eine elektronische Einrichtung (48) vorhanden ist, die erkennt, ob sich der Sensor (30) in einer Betriebsverbindung mit einem Anschlussgerät befindet und/oder ob der Sensor (30) mit einem externen Rechner (20) verbunden ist.

5. Sensor nach Anspruch 4,
**dadurch gekennzeichnet,**
**dass** die elektronische Einrichtung (48) eine an mindestens einem Kontakt des ersten (34) oder des zweiten Anschlussmittels (36) anliegende Versorgungsspannung auswertet.

6. Sensor nach Anspruch 4 oder 5,
**dadurch gekennzeichnet,**
**dass** die elektronische Einrichtung (48) ein an mindestens einem Kontakt des ersten (34) oder des zweiten Anschlussmittels (36) anliegendes Datensignal auswertet.

7. Sensor nach einem der Ansprüche 1 bis 6,
**dadurch gekennzeichnet,**
**dass** die Steuer- und Auswerteeinrichtung (40) dazu eingerichtet ist, im Konfigurationsmodus über zwei Adern einer Datenleitung Konfigurationsdaten differenziell zwischen dem Sensor (30) und dem Rechner (20) zu übertragen.

8. Sensor nach einem der Ansprüche 1 bis 7,
**dadurch gekennzeichnet,**
**dass** der Speicher (50) der Steuer- und Auswerteeinheit (40) einen schreibgeschützten Bereich (57) aufweist.

9. Sensor nach einem der Ansprüche 1 bis 8,
**dadurch gekennzeichnet,**
**dass** der Steckverbinder (38) ein dichtender Rundsteckverbinder ist.

10. Sensor nach einem der Ansprüche 1 bis 9,
**dadurch gekennzeichnet,**
**dass** in einem Speicher der Steuer- und Auswerteeinheit (40) ein Bootloader (53) vorhanden ist.,

11. Verfahren zum Konfigurieren eines Sensors für die Automatisierungstechnik, insbesondere nach einem der Ansprüche 1 bis 10,
bei dem der Sensor (30) zeitweilig mit einem externen Rechner (20) verbunden wird,
bei dem anschließend eine in einem Speicher (50) des Sensors (30) gespeicherte Konfigurationssoftware (56) in einen Arbeitsspeicher des Rechners (20) geladen wird und
bei dem anschließend der Sensor (30) mit Hilfe der Konfigurationssoftware (56) automatisch oder von einem Benutzer konfiguriert wird.

12. Verfahren nach Anspruch 11 ,
**dadurch gekennzeichnet,**
**dass** in dem Konfigurationsmodus über zwei Adern einer Datenleitung Konfigurationsdaten differenziell zwischen dem Sensor (30) und dem Rechner (20) übertragen werden.

13. Verfahren nach Anspruch 11 oder 12,
**dadurch gekennzeichnet,**
**dass** die Bandbreite, mit welcher Daten im Konfigurationsmodus zwischen dem Sensor (30) und dem externen Rechner (20) übertragen werden, größer ist als 1 MBit/s.

14. Verfahren nach einem der Ansprüche 11 bis 13,
**dadurch gekennzeichnet,**
**dass** der Sensor (30) von dem externen Rechner (20) als Massenspeicher erkannt und behandelt wird.

15. Verfahren nach einem der Ansprüche 11 bis 14,
**dadurch gekennzeichnet,**
**dass** der Sensor (30) im Konfigurationsmodus an eine USB-Schnittstelle (22) des externen Rechners angeschlossen ist.

16. Verfahren nach einem der Ansprüche 11 bis 15,
**dadurch gekennzeichnet,**
**dass** die Konfigurationssoftware (56) nach Verbindung des Sensors (30) mit dem externen Rechner (20) automatisch oder nach Bestätigung durch einen Benutzer auf dem externen Rechner (20) gestartet wird.

17. Verfahren nach einem der Ansprüche 11 bis 16,
**dadurch gekennzeichnet,**
**dass** die Konfigurationssoftware (56) den externen Rechner (20) veranlasst, eine Netzwerkverbindung zu einem Remote-Host aufzubauen und zu prüfen, ob aktuelle Programmversionen für die Konfigurationssoftware (56) und/oder eine Sensor-Firmware (52) vorliegen und
**dass** gegebenenfalls aktuelle Programmversionen vom Remote-Host heruntergeladen und in den Speicher (50) des Sensors (30) übertragen werden.

18. Verfahren nach einem der Ansprüche 11 bis 17,
**dadurch gekennzeichnet,**
**dass** die Konfigurationssoftware (56) in dem Speicher (50) des Sensors (30) als ausführbares oder interpretierbares Programm gespeichert ist.
